# EUROPEAN PATENT SPECIFICATION

(11) **EP 2 787 245 B1**
(45) Date of publication and mention of the grant of the patent: **11.10.2017**
(21) Application number: 14153676.3
(22) Date of filing: 03.02.2014
(51) Int. Cl.: F16G 11/04, F16G 15/06

(54) **Thimble mechanism for retention of a shackle in a wire loop termination**
Fingerhutmechanismus zum Festhalten eines Bügels in einem Drahtschleifenanschluss
Mécanisme d'ancrage pour la rétention d'un maillon de terminaison dans une boucle de fil

(30) Priority: 04.02.2013 US 201313758661
(43) Date of publication of application: 08.10.2014
(73) Proprietor: The Crosby Group LLC, Tulsa, OK 74110 (US)
(72) Inventor: Beall, Roger E., Mounds, OK 74047, OK Oklahoma (US); Boeckman, Paul A., Tulsa, OK 74137, OK Oklahoma (US); Garrett, Charles R., Ramona, OK 74061, OK Oklahoma (US); Postelwait, Larry, Catoosa, OK 74015, OK Oklahoma (US)
(74) Representative: Weickmann & Weickmann PartmbB

(56) References cited:
- US-A- 2 709 616
- US-A- 4 225 172
- US-A1- 2010 050 590
- US-A1- 2012 003 033

## Description

### BACKGROUND OF THE INVENTION

### 1. Field of the Invention.

The present invention relates to a thimble mechanism for retention of a shackle in a wire rope loop termination.

### 2. Prior Art.

There are a wide variety of terminations for metal wire rope which serve to discourage fraying of the end of the wire rope and serve to permit connection to a load.

One such wire rope loop termination is accomplished in a number of manners. In one configuration, a clamp or clip is used to fix the loose end of the wire rope back to itself to form an oval or a loop. An example of a wire rope clip may be seen in Assignee's U.S. Patent No. 5,802,680 titled "Two-Piece Bolt and Saddle for Wire Rope Clips".

In another configuration, a swage termination is formed by mechanically compressing and deforming a fitting. An example of a swage termination may be seen in Assignee's U.S. Patent No. 6,035,692 titled "Two Pass Method and Apparatus of Forming a Hexagonal Swage for Wire Rope Terminations." Finally, an eye splice may be utilized as an alternate termination.

When there is a concern that a wire rope loop may bend too tightly under a load, a thimble may be utilized inside of the wire rope loop to preserve the shape of the loop, and to protect the wire rope from pinching and abrading on the inside of the loop. The thimble also prevents the load from coming into direct contact with the individual wires of the wire rope in order to spread the force of the load.

Various types of shackles are often used to connect a load to a wire rope loop termination. Standard shackles include a body or bow and a pair of extending legs. Each leg terminates in an ear or end to form a pair of opposed, aligned openings for receipt of a shackle bolt. When in use, the body or bow of the shackle are engaged with the wire rope loop termination.

Accordingly, it would be desirable to provide a thimble mechanism to encourage retention of the shackle in the wire rope loop termination after installation.

It would also be desirable to provide a thimble mechanism with a thimble which retains a shackle in the thimble after a wire rope is installed around the thimble.

It would also be desirable to provide a thimble mechanism for retention of a shackle in a wire rope loop termination that may be employed with any standard shackle design.

It would also be desirable to provide a thimble mechanism for retention of a shackle in a wire rope loop termination utilizing a retainer pin that locks the shackle in place and that itself is locked by the wire rope loop in the thimble.

It would also be desirable to provide a thimble mechanism which retains a shackle in a wire rope loop termination so that the shackle cannot be removed from the thimble mechanism after the wire rope is moved into place.

Furthermore, from US 2012/003 033 A1 a thimble device for a wire rope loop termination for retention of a shackle is known, the thimble device having a bow and a pair of opposed legs which thimble device comprises:
- a thimble body having an external arched edge with a rope groove for receipt of a wire rope therein;
- a central opening through said thimble body,
- after receiving a wire rope around said rope groove, the remaining central opening having a size so that the shackle cannot be removed from said thimble body.

### SUMMARY OF THE INVENTION

The present invention is directed to a thimble mechanism for retention of a shackle in a wire rope loop termination.

In one preferred embodiment, a thimble body includes an external arcuate edge with a thimble rope groove recessed therein. The thimble body includes a central opening larger than the width but smaller than the depth of shackle ends. A key way or slot is provided in the thimble body with the key way extending from the central opening to the thimble rope groove partially circumventing the thimble body.

In order to install the thimble mechanism, the bow of the shackle is inserted or reeved through the key way and into the central opening so that the bow resides in the central opening of the thimble body. The wire rope termination is thereafter completed with the wire rope reeved into place in and around the thimble rope groove. Once the wire rope loop termination has been completed, the wire rope closes the key way or slot and prevents the shackle from being removed. The angle and the width of the central opening and the key way prevent the end of the shackle from being removed from the thimble body after the wire rope is installed.

A second preferred embodiment employs a thimble body with an oval central opening and a retaining pin across the central opening.

A third preferred embodiment employs a thimble body having a thimble rope groove dimensioned so that the shackle cannot be removed from the thimble mechanism after the wire rope is reeved into place in and around the thimble rope groove.

### BRIEF DESCRIPTION OF THE DRAWINGS

Figures **1** through **5** illustrate a first, preferred embodiment of the present invention showing sequential illustration of a thimble mechanism for retention of a shackle in a wire rope loop termination;
Figures **6** through **9** illustrate an embodiment of a thimble mechanism for retention of a shackle in a wire rope loop termination employing a thimble with a retainer cross pin not being part of the invention and
Figures **10** through **14** illustrate another embodiment of a thimble mechanism for retention of a shackle in a wire loop termination not being part of the invention.

### DETAILED DESCRIPTION OF THE PREFERRED EMBODIMENTS

The embodiments discussed herein are merely illustrative of specific manners in which to make and use the invention and are not to be interpreted as limiting the scope of the instant invention.

While the invention has been described with a certain degree of particularity, it is to be noted that many modifications may be made in the details of the invention's construction and the arrangement of its components without departing from the spirit and scope of this disclosure. It is understood that the invention is not limited to the embodiments set forth herein for purposes of exemplification.

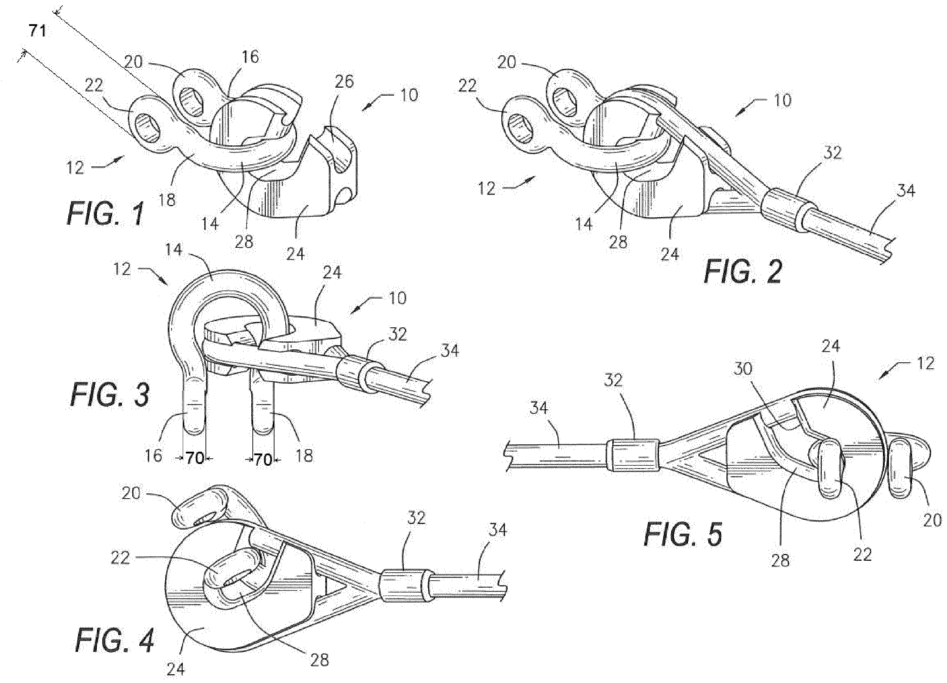

Referring to the drawings in detail, Figures **1** through **5** illustrate a first preferred embodiment **10** of the present invention showing the sequential installation of a thimble mechanism for retention of a shackle in a wire rope loop termination.

The present invention may be used with a wide variety of standard shackles. As seen in Figure **1****,** the shackle **12** has a body or bow **14** and a pair of extending legs **16** and **18.** Each of the legs **16** and **18** terminates in an ear or end **20** and **22,** respectively. Each end **20** and **22** includes an opening to form a pair of opposed, aligned openings for receipt of a shackle bolt or screw pin. Each of the ends **20** and **22** has in the direction of the aligned openings a width **70** which is smaller than the outer depth **71** of each of the ends **20** and **22** in a plane cross to the direction of the aligned openings.

A thimble body **24** includes an external arcuate edge with a thimble rope groove **26** recessed therein. The thimble rope groove **26** forms the general contour of a loop for the wire rope. The thimble body **24** includes a central opening **28,** is larger than the width. At least one dimension of the contour of the central opening **28,** especially the largest dimension, is larger than the width **70** but smaller than the depth **71** of the shackle ends **20** and **22.** Additionally, a slot or keyway **30** is provided in the thimble body **24** with the keyway **30** extending from the central opening **28** to the thimble rope groove **26** of the thimble body **24.** At least one dimension, especially the largest dimension, of the contour of the central opening **28** together with the contour of the keyway **30** limited by a rope which is lying in the rope groove **26,** is larger than the width **70** but smaller than the depth **71** of the shackle ends **20** and **22.**

As seen in Figure **1****,** in order to install the thimble mechanism, the bow **14** of the shackle **12** is inserted or reeved through the keyway **30** and into the central opening **28** so that the bow **14** resides in the central opening **28** of the thimble body **24.**

As seen in Figure **2****,** the wire rope termination **10** is thereafter completed in a variety of ways. In the embodiment shown in Figure **2****,** a cylindrical sleeve **32** is initially slipped or reeved onto a wire rope **34.** Thereafter, the wire rope **34** is reeved into place in and around the thimble rope groove **26.** Finally, the cylindrical sleeve **32** is swaged around the wire rope **34** to complete the loop termination. Once the loop termination has been completed, the wire rope **34** closes the keyway **30** or slot and prevents the shackle **14** from being removed. As seen in Figures **3, 4** and **5****,** the angle and the width of the central opening **28** and keyway prevent the end of the shackle **12** from being removed from the thimble body **24.**

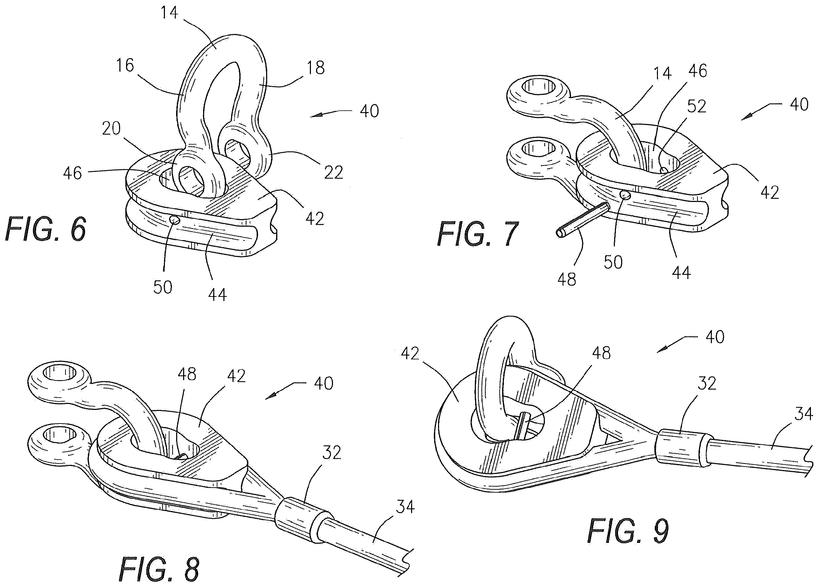

Figures **6** through **9** illustrate a second preferred embodiment **40** of the thimble mechanism for retention of a shackle in a wire rope loop termination employing a thimble with a retainer cross pin.

As in the previous embodiment, a shackle **12** has a body or bow **14** and a pair of extending legs **16** and **18.** Each of the legs **16** and **18** terminates in an ear or end **20** and **22,** respectively. Each end **20** and **22** includes an opening to form a pair of opposed, aligned openings for receipt of a shackle bolt (not shown). Each of the ends **20** and **22** has a width which is smaller than the depth.

A thimble body **42** includes an external arcuate edge with a thimble rope groove **44** which circumnavigates the thimble body **42.** The thimble body **42** may be seen apart from the assembly **40** in Figure **6****.** The thimble rope groove **44** forms the general contour of a loop for the receipt of the wire rope.

The thimble body **42** also includes a central opening **46** therethrough. The central opening is in the form of an oval which is larger than the width and the depth of the shackle ends **20** and **22,** which can be best seen in Figure **6****.**

An installation sequence not being part of the invention is illustrated in Figures **6** through **9****.** In order to install the thimble mechanism, as best seen in Figure **6****,** one end of the shackle, such as end **20,** is inserted or slipped through the central opening or slot **46** in the thimble body **42.** Once the end **20** has been inserted into and through the central opening, the bow **14** of the shackle will reside in the central opening, as best seen in Figure **7****.**

Thereafter, as seen in Figure **7****,** a retaining pin **48** is inserted through a first opening **50** in the thimble body **42** into and across the central opening **46** and into an opposed, second opening **52** in the thimble body **42.** The retaining pin **48** and the openings **50** and **52** may be designed so that the retaining pin **48** will friction fit within the openings. In addition, the location of the openings and the pin **48** are designed to retain the proper orientation of the shackle **12.**

Thereafter, as seen in Figure **8****,** a cylindrical sleeve **32** will be slipped over or reeved onto an end of a wire rope **34.** Thereafter, the wire rope **34** will be reeved or threaded in the thimble rope groove **44** of the thimble body **42** to form a termination loop. Finally, the sleeve **32** will be swaged or otherwise connected to the wire rope **34.**

Thereafter, as best seen in Figure **9****,** the shackle ends **20** and **22** will be prevented from being removed from the central opening of the thimble body **42** because the pin **48** reduces the size of the central opening. Additionally, the wire rope **34** discourages any movement or removal of the retaining pin 48 in the thimble body.

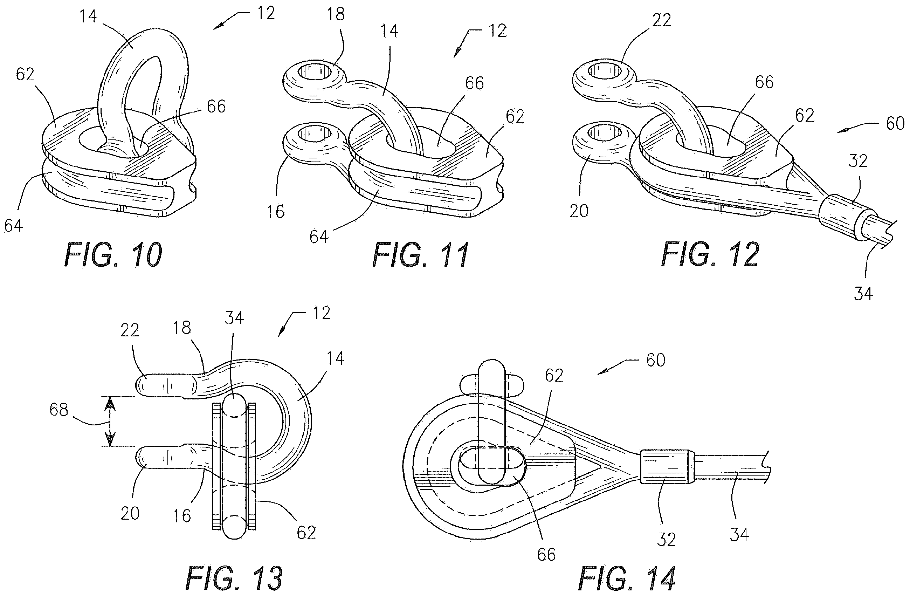

Figures **10, 11, 12, 13** and **14** illustrate another embodiment **60** not being part of the present invention showing sequential installation of a thimble mechanism for retention of a shackle in wire rope loop termination. As in the previous embodiments, the shackle **12** has a body or bow **14** and a pair of extending legs **16** and **18.** Each of the legs **16** and **18** terminates in an ear or end **20** and **22,** respectively. Each end **20** and **22** includes an opening to form a pair of opposed, aligned openings for receipt of a shackle bolt (not shown). There is a defined space between the ends **20** and **22** as seen in Figure **13****,** and as shown by arrow **68.**

A thimble body **62** includes an external arcuate edge with a thimble rope groove **64** recessed therein as best seen in Figures **10** and **11****.** The thimble body **62** also includes a central opening **66** for receipt of the shackle **12.**

As seen in Figures **10** and **11****,** in order to install the thimble mechanism **60,** one end of the shackle **12** is inserted or reeved through the central opening **66** of the thimble body **62.** The shackle **12** may be slipped or inserted into the thimble body **62** without the wire rope installed.

Thereafter, as best seen in Figure **11****,** the bow **14** of the shackle **12** will be suspended from the thimble body **62.** Thereafter, as best seen in Figure **12****,** a cylindrical sleeve **32** will be slipped over or reeved onto an end of a wire rope **34.** Thereafter, the wire rope **34** will be reeved or threaded in the thimble rope groove **64** of the thimble body **62** in order to form a termination loop. Finally, the sleeve will be swedged or otherwise connected to the wire rope **34.**

As best seen in Figures **13** and **14****,** once the wire rope has been installed in the rope groove **64,** the thimble body **62** and wire rope **34** have a dimension which is larger than the defined space of the opening between the ends **20** and **22** of the legs **16** and **18** of the shackle. Accordingly, the shackle **12** cannot be removed.

### LIST OF REFERENCE SIGNS

- 10: wire rope loop termination
- 12: shackle
- 14: bow, body
- 16,18: leg
- 20,22: end
- 24: thimble body
- 26: thimble rope groove
- 28: opening
- 30: keyway
- 32: sleeve
- 34: wire rope
- 40: embodiment
- 42: thimble body
- 44: groove
- 46: opening
- 48: pin
- 50,52: opening
- 60: thimble mechanism
- 62: thimble body
- 64: rope groove
- 66: opening
- 68: arrow
- 70: width
- 71: depth

## Claims

1. A thimble device with
- a thimble body (24) for a wire rope loop termination (10) and with
- a shackle (12) having a bow (14) and a pair of opposed legs (16, 18) with each of said legs having an end (20, 22) with a width (70) smaller than a depth (71), which thimble device comprises:
- a thimble body (24) having an external arcuate edge with a rope groove (26) for receipt of a wire rope therein;
- a central opening (28) through said thimble body (24), said central opening (28) larger than said width (70) but smaller than said depth (71) of said shackle ends;
- a keyway (30) in said thimble body (24) extending from said central opening (28) to said arcuate edge of said thimble body (24); and **characterised in that**
- in use after receiving a wire rope (34) around said rope groove (26), the remaining central opening (28) has a size so that the shackle (12) cannot be removed from said thimble body (24) and wherein the wire rope (34) blocks the passage of the keyway (30) and prevents the shackle (12) from being removed.

2. A method of retention of a shackle (12) in a wire rope loop termination (10) containing a thimble body (24) wherein said shackle (12) includes a bow (14) and a pair of opposed legs (16, 18) with each of said legs (16, 18) having an end (20, 22) with a width (70) smaller than a depth (71), which method comprises:
- inserting the shackle (12) with its bow (14) extending through a central opening (28) of the thimble body (24) by passing through a keyway (30) in said thimble body (24) extending from said central opening (28) to an external arcuate edge of said thimble body (24);
- reeving a wire rope (34) around a rope groove (26) in an external arcuate edge of said thimble body (24); and
- **characterised in that** completing said wire rope loop termination (10) by forming a wire rope loop termination (10) in order to block the passage of said keyway (30) with said wire rope (34) and preventing the shackle (12) from being removed.

## Patentansprüche

1. Kauschvorrichtung mit
- einem Kauschkörper (24) für ein Drahtseilschleifenanschluss (10), und mit
- einem Schäkel (12), der einen Bogen (14) und ein Paar von gegenüberliegenden Schenkeln (16, 18) aufweist, wobei jeder der Schenkel ein Ende (20, 22) mit einer kleineren Breite (70) als Tiefe (71) aufweist, wobei die Kauschvorrichtung aufweist:
- einen Kauschkörper (24), der einen äußeren Bogenrand mit einer Seilnut (26) zum Aufnehmen eines Drahtseils darin aufweist;
- eine zentrale Öffnung (28) durch den Kauschkörper (24), wobei die zentrale Öffnung (28) größer ist als die Breite (70) aber kleiner als die Tiefe (71) der Schäkelenden;
- einen Einführweg (30) in dem Kauschkörper (24), der sich von der zentralen Öffnung (28) zu dem Bogenrand des Kauschkörpers (24) erstreckt; und
**dadurch gekennzeichnet, dass**
- im Gebrauch nach Aufnahme eines Drahtseils (34) um die Seilnut (26) herum, die verbleibende zentrale Öffnung (28) eine solche Größe hat, dass der Schäkel (12) nicht aus dem Kauschkörper (24) entfernt werden kann, und wobei das Drahtseil (34) den Durchtritt des Einführwegs (30) blockiert und verhindert, dass der Schäkel (12) entfernt wird.

2. Verfahren zum Halten eines Schäkels (12) in einem Drahtseilschleifenanschluss (10), der einen Kauschkörper (24) enthält, wobei der Schäkel (12) einen Bogen (14) und ein Paar von gegenüberliegenden Schenkeln (16, 18) aufweist, wobei jeder der Schenkel (16, 18) ein Ende (20, 22) mit einer kleineren Breite (70) als Tiefe (71) aufweist, wobei das Verfahren aufweist:
- Einsetzen des Schäkels (12), wobei sich sein Bogen (14) durch eine zentrale Öffnung (28) des Kauschkörpers (24) erstreckt, indem er durch einen Einführweg (30) in dem Kauschkörper (24) durchtritt, der sich von der zentralen Öffnung (28) zu einem äußeren Bogenrand des Kauschkörpers (24) erstreckt;
- Winden eines Drahtseils (34) um eine Seilnut (26) in einem äußeren Bogenrand des Kauschkörpers (24); und
**gekennzeichnet durch**
Fertigstellen des Drahtseilschleifenanschlusses (10) **durch** Bilden eines Drahtseilschleifenanschlusses (10), um den Durchtritt des Drahtseils (34) **durch** den Einführweg (30) zu blockieren und ein Entfernen des Schäkels (12) zu verhindern.

## Revendications

1. Dispositif d'ancrage comprenant
• un corps d'ancrage (24) pour une terminaison de boucle (10) d'un câble métallique et
• une manille (12) ayant un arc (14) et une paire de branches opposées (16, 18), chaque dite branche présentant une extrémité (20, 22) dont la largeur (40) est plus petite que la profondeur (71),
le dispositif d'ancrage comprenant :
- un corps d'ancrage (24) présentant un bord arqué externe avec une rainure de câble (26) pour recevoir un câble métallique ;
- une ouverture centrale (28) à travers le corps d'ancrage (24), ladite ouverture centrale (28) étant plus large que ladite largeur (70) mais plus étroite que ladite profondeur (71) des dites extrémités
de manille ;
- une clavette (30) dans ledit corps d'ancrage (24) s'étendant depuis ladite ouverture centrale (28) en direction dudit bord arqué dudit corps d'ancrage (24); et
caractérisé en ce
- que pour l'utilisation après avoir reçu un cable métallique (34) autour de ladite rainure de cable (26), l'ouverture centrale restante (28) est dimensionnée de sorte que la manille (12) ne peut plus être retirée dudit corps d'ancrage (24) et dans lequel le câble métallique (34) bloque le passage de la clavette (30) et évite le retrait de la manille (12).

2. Procédé de retenue d'une manille (12) dans une terminaison de boucle (10) d'un câble métallique comprenant un corps d'ancrage (24) dans lequel ladite manille (12) comprend un arc (14) et une paire de branches opposées (16, 18) chaque dite jambe présentant une extrémité (20, 22) dont la largeur (70) est plus petite que la profondeur (71),
le procédé comprenant :
• l'insertion de la manille (12) par son arc (14) s'étendant à travers une ouverture centrale (28) du corps d'ancrage (24) en passant à travers une clavette (30) dans ledit corps de manchon (24) s'étendant depuis la dite ouverture centrale (28) à un bord externe dudit corps d'ancrage (24) ;
• le mouflage d'un câble métallique (34) autour d'une rainure de câble (26) dans un bord arqué externe du dit corps d'ancrage (24) ; et
• **caractérisé en ce**
**que** ladite terminaison de boucle (10) d'un câble métallique est réalisée en formant une terminaison de boucle (10) du câble mécanique pour bloquer le passage de la dite clavette (30) avec ledit câble métallique (34) et éviter le retrait de l'étrier (12).
